# EUROPÄISCHE PATENTSCHRIFT

(11) **EP 2 886 354 B1**
(45) Veröffentlichungstag und Bekanntmachung des Hinweises auf die Patenterteilung: **01.02.2017**
(21) Anmeldenummer: 13198970.9
(22) Anmeldetag: 20.12.2013
(51) Int. Cl.: B41J 11/48, B41J 3/44, H04N 1/00, B41J 11/54

(54) **Vorrichtung zum Bedrucken und Scannen von bedruckbaren Medien**
Device for printing and scanning printable media
Dispositif d'impression et de scannage de supports imprimables

(43) Veröffentlichungstag der Anmeldung: 24.06.2015
(73) Patentinhaber: Wincor Nixdorf International GmbH, 33106 Paderborn (DE)
(72) Erfinder: Baitz, Günter, 13629 Berlin (DE); Blechert, Thomas, 13503 Berlin (DE); Hoffmann, Stefan, 13505 Berlin (DE)
(74) Vertreter: Maikowski & Ninnemann Patentanwälte Partnerschaft mbB

(56) Entgegenhaltungen:
- DE-A1-102010 048 921
- US-A- 5 567 068
- US-A- 6 088 121
- US-A- 6 109 805
- US-A1- 2012 019 878
- US-B1- 6 350 005

## Beschreibung

Die Erfindung betrifft eine Vorrichtung zum Bedrucken und Scannen von bedruckbaren Medien nach dem Oberbegriff des Anspruchs 1.

Eine derartige Vorrichtung umfasst eine Druckereinrichtung, eine Scannereinrichtung sowie eine Presentereinrichtung. Die Druckereinrichtung weist dabei einen ersten Antrieb sowie eine Druckeinheit auf, mit welcher die bedruckbaren Medien bedruckt werden können. Die Scannereinrichtung dient zum Scannen, d.h. zum Erfassen eines Abbilds der bedruckbaren Medien und umfasst ebenfalls einen Antrieb. Über die Presentereinrichtung können die bedruckbaren Medien in die Vorrichtung eingezogen und aus dieser ausgegeben werden. Dabei sind die bedruckbaren Medien mittels des ersten Antriebs der Druckereinrichtung und des Antriebs der Scannereinrichtung entlang einer ersten längserstreckten Transportbahn transportierbar.

Eine Vorrichtung der genannten Art ist beispielsweise aus der DE 10 2010 048 921 A1 bekannt. Die darin beschriebene Vorrichtung zum Bearbeiten von papiernen Dokumenten umfasst einen Drucker und eine Dokumenten-Einführungsöffnung, an die sich eine erste Dokumenten-Transportbahn anschließt, und zeichnet sich durch einen in den Drucker integrierten Scanner aus. Dabei ist die Dokumenten-Transportbahn für den Drucker und für den Scanner identisch. Diese Vorrichtung kann in eine in Apotheken verwendete Kasse eingebaut und zum Bedrucken von Rezepten verwendet werden. Eine solche Kasse besitzt ferner ein Bon-Ausgabesystem, mit dem ein Bon bedruckt, entlang einer zweiten Transportbahn transportiert und ausgegeben werden kann.

Die Kasse umfasst damit zwei separate Drucker (einen ersten in der Vorrichtung zum Bearbeiten von papiernen Dokumenten sowie einen zweiten im Bon-Ausgabesystem) und zwei separate Einrichtungen (Presenter) zum Einzug bzw. zur Ausgabe der Dokumente bzw. des Bons. Daher muss die Kasse groß genug sein, um beide Vorrichtungen mit den separaten Druckern und Presentern aufnehmen zu können und weist folglich an ihrem Einsatzort einen entsprechend hohen Platzbedarf auf. Zudem bedingt der Einsatz von zwei separaten Druckern einen aufwändigen Aufbau.

Die US 6,350,005 beschreibt eine Vorrichtung und ein Verfahren zum Auslesen von magnetisch auf einem Medium gespeicherten Informationen und zum Bedrucken dieses und eines weiteren Mediums. Bei dem Medium mit Magnetinformationen handelt es sich um einen Scheck mit einem Magnetstreifen, welcher mittels eines Magnetkopfes der Vorrichtung ausgelesen werden kann. Mit Hilfe von Transportrollen wird ein der Vorrichtung zugeführter Scheck entlang einer Transportbahn transportiert. Mittels diesem sowie eines weiteren Paares von Transportrollen wird der Scheck zwei Druckereinrichtungen zugeführt, welche jeweils eine Seite des Schecks bedrucken können. Oberhalb der in Transportrichtung zweiten Druckereinrichtung ist eine Öffnung in der Vorrichtung vorgesehen, so dass der Scheck vertikal nach oben ausgegeben werden kann.

Die US 2012/0019878 A1 betrifft eine kombinierte Scann- und Druckvorrichtung, mittels welcher Medien entlang einer Transportbahn transportiert, bedruckt sowie mittels optischen Erfassungsvorrichtungen beidseitig gescannt werden können.

Der Erfindung liegt das Problem zugrunde, eine Vorrichtung zu schaffen, mit der bedruckbare Medien auf zumindest einer Transportbahn gescannt und auf zwei Transportbahnen transportiert und bedruckt werden können, wobei die Vorrichtung einen reduzierten Platzbedarf und einen einfachen Aufbau aufweist.

Dieses Problem wird durch eine Vorrichtung zum Bedrucken und Scannen von bedruckbaren Medien mit den Merkmalen des Anspruchs 1 gelöst.

Danach ist vorgesehen, dass die Druckereinrichtung benachbart zu ihrem ersten Antrieb einen (von dem ersten Antrieb unterschiedlichen) zweiten Antrieb umfasst, wobei bedruckbare Medien mittels dieses zweiten Antriebs und des Antriebs der Scannereinrichtung auf einer zur ersten Transportbahn parallelen zweiten längserstreckten Transportbahn transportierbar sind.

Dabei ist die Druckeinheit derart im Wesentlichen quer zu den Transportbahnen verschiebbar, dass bedruckbare Medien auf beiden Transportbahnen mit jener Druckeinheit bedruckbar sind.

Als bedruckbare Medien können insbesondere Blätter oder Rollen aus Fasermaterial wie Papier eingesetzt werden, wobei allgemein bedruckbare und mittels der Antriebe entlang einer der Transportbahnen transportierbare Gegenstände (wie z.B. bedruckbare Kunststofffolien) verwendet werden können. Die Transportbahnen sind quer zu ihrer Längserstreckung voneinander beabstandet angeordnet.

Eine derartige Vorrichtung kann beispielsweise als Apotheken- oder Lottoterminal verwendet werden. Dabei kann ein Rezept bzw. Lottoschein entlang der ersten Transportbahn transportiert werden, während ein (Kassen-)Bon entlang der zweiten Transportbahn transportiert wird. Beide bedruckbare Medien werden dabei von derselben Druckeinheit bedruckt. Denkbar ist dabei folgender Vorgang: Ein Rezept bzw. ein ausgefüllter Lottoschein wird an der Presentereinrichtung entlang der ersten Transportbahn in die Vorrichtung eingeführt und von der Scannereinrichtung gescannt, d.h., Das Abbild und/oder die auf dem Rezept bzw. Lottoschein vorhandenen Informationen werden erfasst und ggf. mit entsprechenden Komponenten gespeichert, verarbeitet und/oder an eine externe Vorrichtung bereitgestellt. Daraufhin wird das Rezept bzw. der Lottoschein bedruckt, erneut gescannt und an der Presentereinrichtung ausgegeben. Gleichzeitig oder anschließend wird ein Bonpapier der Druckereinrichtung zugeführt, bedruckt und an der Presentereinrichtung ausgegeben.

Die Scannereinrichtung kann dazu eingerichtet sein, sowohl auf der ersten Transportbahn als auch auf der zweiten Transportbahn befindliche bedruckbare Medien zu scannen. Alternativ kann vorgesehen sein, dass die Scannereinrichtung dazu ausgelegt ist, nur auf einer der Transportbahnen befindliche bedruckbare Medien zu scannen, solange der Antrieb der Scannereinrichtung zum Transport von bedruckbaren Medien auf beiden Transportbahnen verwendet werden kann.

Es kann für eine oder beide Transportbahnen vorgesehen sein, dass bedruckbare Medien über die Presentereinrichtung der Druckereinrichtung zuführbar sind. Alternativ oder zusätzlich kann für eine oder beide Transportbahnen eine externe Zufuhr (von einem Vorrat von bedruckbaren Medien) oder ein Magazin (mit einem in der Vorrichtung angeordneten Vorrat an bedruckbaren Medien) vorgesehen sein, über welches bedruckbare Medien der Druckereinrichtung zuführbar sind. Die Presentereinrichtung kann an die Scannereinrichtung angrenzen oder auch als Teil der Scannereinrichtung ausgeführt sein.

Die Druckeinheit der Druckereinrichtung kann z.B. in Form eines Druckkopfes eines Tintenstrahldruckers, eines Nadeldruckers oder eines Laserdruckers ausgebildet sein.

Gemäß einer Ausführungsform der erfindungsgemäßen Vorrichtung sind die Druckereinrichtung und die Scannereinrichtung entlang zumindest einer der beiden Transportbahnen hintereinander angeordnet. Die Transportbahnen führen dabei durch die Scannereinrichtung und/oder die Druckereinrichtung hindurch. Während eines Transports kann ein bedruckbares Medium über einen Abschnitt der ersten bzw. zweiten Transportbahn durch den Antrieb der Scannereinrichtung transportiert werden und über einen weiteren Abschnitt durch einen der Antriebe der Druckereinrichtung. Zwischen diesen beiden Abschnitten wird das bedruckbare Medium von beiden Antrieben gleichzeitig transportiert, wobei eine Übergabe des bedruckbaren Mediums von einem der Antriebe zu dem anderen Antrieb erfolgt.

Damit es bei der Übergabe des bedruckbaren Mediums von einem Antrieb der Scannereinrichtung bzw. der Druckereinrichtung an einen Antrieb der jeweils anderen Einrichtung nicht zu einem Aufstauen oder zu einer Beschädigung (z.B. zu einem Zerknittern oder Zerreißen) des bedruckbaren Mediums kommt, können zumindest einer der Antriebe (insbesondere beide Antriebe) der Druckereinrichtung und der Antrieb der Scannereinrichtung miteinander synchronisiert werden. Die Synchronisation kann dabei allgemein entweder durch eine Steuerung sowohl der Antriebe der Druckereinrichtung als auch der Scannereinrichtung in Abhängigkeit von vorgegebenen Transportparametern (z.B. einer bestimmten Transportgeschwindigkeit, der Transportrichtung und/oder einem Starten oder Stoppen des Transports) erfolgen. Alternativ kann die Steuerung eines oder beider Antriebe der Druckereinrichtung in Abhängigkeit von aktuellen Transportparametern des Antriebs der Scannereinrichtung erfolgen oder umgekehrt die Steuerung des Antriebs der Scannereinrichtung in Abhängigkeit von aktuellen Transportparametern eines oder beider Antriebe der Druckereinrichtung.

Zur Steuerung der Antriebe der Druckereinrichtung und/oder der Scannereinrichtung und zur Synchronisation eines Antriebs oder beider Antriebe der Druckereinrichtung und des Antriebs der Scannereinrichtung kann die Vorrichtung eine Steuerungseinheit umfassen. Zur Synchronisation eines oder beider Antriebe der Druckereinrichtung mit dem Antrieb der Scannereinrichtung kann die Steuerungseinheit Motorsignale des Antriebs der Scannereinrichtung auslesen und in Abhängigkeit von diesen einen oder beide Antriebe der Druckereinrichtung steuern. Bei den Motorsignalen handelt es sich allgemein um für mindestens einen Transportparameter charakteristische Signale, beispielsweise um Phasensignale eines Antriebsmotors des Antriebs der Scannereinrichtung oder um von einer Sensorik der Scannereinrichtung bereitgestellte Signale. Um die Motorsignale der Scannereinrichtung auslesen zu können, ist die Steuerungseinheit über eine Datenverbindung, wie z.B. ein Kabel, mit dem Antrieb der Scannereinrichtung bzw. einer Sensorik dessen verbunden. Die Steuerungseinheit kann zudem geeignete Mittel zur Auswertung der ausgelesenen Motorsignale umfassen und mindestens einen Antrieb der Druckereinrichtung in Abhängigkeit der ausgewerteten Motorsignale steuern.

Gleichermaßen ist es analog auch umgekehrt möglich, dass die Steuerungseinheit Motorsignale von zumindest einem der Antriebe der Druckereinrichtung ausliest und den Antrieb der Scannereinrichtung in Abhängigkeit von jenen Motorsignalen ansteuert.

Somit kann zumindest einer der Antriebe (der Scannereinrichtung oder der Druckereinrichtung) eine Transportgeschwindigkeit (und -richtung) bzw. ein Starten oder Stoppen des Transports der bedruckbaren Medien vorgeben. Die Steuerungseinheit steuert dann zumindest einen anderen der Antriebe derart, dass dieser die bedruckbaren Medien mit derselben Transportgeschwindigkeit (und -richtung) transportiert bzw. den Transport im Wesentlichen gleichzeitig startet oder stoppt.

Die Antriebe der Scannereinrichtung und der Druckereinrichtung können derart ausgebildet sein, dass ein erstes bedruckbares Medium entlang einer der beiden Transportbahnen transportiert und mittels der Druckereinrichtung bedruckt und/oder mittels der Scannereinrichtung gescannt werden kann, während gleichzeitig ein zweites bedruckbares Medium entlang der anderen der beiden Transportbahnen transportiert und mittels der Druckereinrichtung bedruckt und/oder mittels der Scannereinrichtung gescannt wird. Hierdurch wird ein schneller Bearbeitungsvorgang von zwei bedruckbaren Medien ermöglicht.

Ferner kann die Vorrichtung zumindest eine Schneideeinrichtung zum Schneiden eines bedruckbaren Mediums umfassen, welche auf mindestens einer der Transportbahnen angeordnet ist. Mit einer derartigen Schneideeinrichtung kann ein bedruckbares Medium geschnitten und damit zerteilt werden. Hierbei kann entweder ein über die Presentereinrichtung eingeführtes bedruckbares Medium geschnitten werden oder ein bedruckbares Medium, welches als Vorrat in einer Aufnahme (z.B. einem Magazin) der Vorrichtung, beispielsweise in Form einer Papierrolle, angeordnet ist. Eine Schneideeinrichtung kann einen Aktuator umfassen, der von der Steuerungseinheit (oder einer anderen Steuerungseinrichtung der Vorrichtung) gesteuert wird und das Schneiden eines in der Schneideeinrichtung befindlichen bedruckbaren Mediums bewirkt.

Die Presentereinrichtung kann zwei benachbarte und sich an die parallelen Transportbahnen anschließende Presenter zum Einziehen bzw. Ausgeben von bedruckbaren Medien umfassen.

Die Scannereinrichtung kann entweder dazu ausgebildet sein, bedruckbare Medien nur von jeweils einer Seite zu scannen oder dazu, bedruckbare Medien im Wesentlichen gleichzeitig beidseitig (d.h. von zwei gegenüberliegenden Seiten jeweils eines bedruckbaren Mediums, wie die Vorder- und Rückseite eines Rezepts oder Lottoscheins) zu scannen. Insbesondere kann die Scannereinrichtung derart ausgebildet sein, dass sie bedruckbare Medien scannen kann, unabhängig davon, von welcher Seite der Scannereinrichtung entlang der Transportbahn sie der Scannereinrichtung zugeführt werden. Ferner kann sich die Scannereinrichtung über beide Transportbahnen und insbesondere senkrecht zu diesen erstrecken.

Die Erfindung wird nachfolgend unter Bezugnahme auf die Figuren anhand von Ausführungsbeispielen näher erläutert werden. Es zeigen:
- Fig. 1: eine Vorrichtung zum Bedrucken und Scannen von bedruckbaren Medien in einer perspektivischen Ansicht; und
- Fig. 2: die Vorrichtung aus Fig. 1 in einer aufgeschnittenen Ansicht von oben.

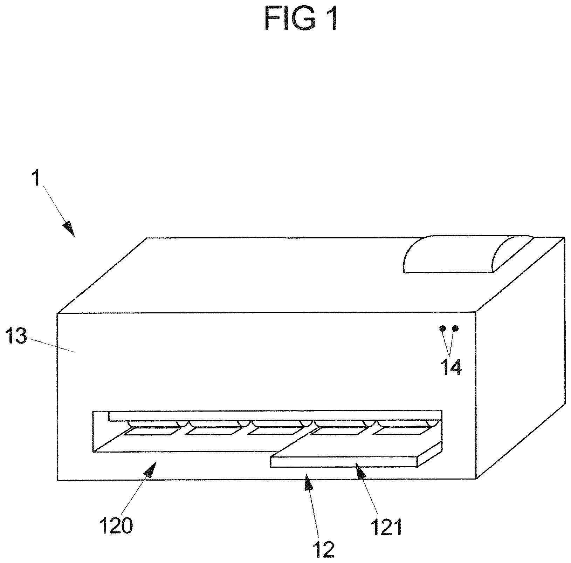

Fig. 1 zeigt eine Vorrichtung 1 zum Bedrucken und Scannen von bedruckbaren Medien In Form eines Apothekenterminals für Apotheken. Die Vorrichtung 1 umfasst ein Gehäuse 13, an dessen einen Seite eine Presentereinrichtung mit einem Rezeptpresenter 120 zum Einzug und zur Ausgabe von Rezepten (Rezeptformularen) und einem Bonpresenter 121 zur Ausgabe von Bons vorgesehen ist.

Möchte ein Kunde einer Apotheke beispielsweise ein auf einem Rezept notiertes Medikament (oder ein sonstiges medizinisches Produkt) erwerben, kann es notwendig sein, dass Informationen zu dem Medikament auf das Rezept gedruckt werden. Ferner muss das Rezept gescannt werden und zwar einmal bevor und einmal nachdem es mit den Informationen bedruckt wurde. Hierzu wird das Rezept in den Rezeptpresenter 120 der Vorrichtung 1 geführt, wo es eingezogen und daraufhin gescannt, bedruckt und nochmals gescannt wird.

Zu diesem Vorgang erhält der Kunde einen Beleg in Form eines Bons, der z.B. einen für das Medikament bezahlten Preis, das Datum und/oder weitere Informationen enthält. Dieser Bon wird ebenfalls mit der Vorrichtung 1 erstellt und dort am Bonpresenter 121 ausgegeben. Die Aktivität bzw. der Status der Vorrichtung 1 und/oder eine Fehleranzeige kann mittels einer Anzeigeeinrichtung 14, hier in Form von Leuchtdioden, alternativ in Form eines Displays, angezeigt werden.

Zur Speicherung und Verarbeitung der gescannten Abbilder des Rezepts kann die Vorrichtung 1 geeignete Komponenten umfassen oder mit einer externen Vorrichtung verbunden sein, die diese Komponenten bereitstellt. Auch kann die Vorrichtung 1 Komponenten umfassen, die die auf das Rezept und auf den Bon zu druckenden Informationen erzeugt und/oder verarbeitet sowie Anzeige- und Eingabeelemente oder mit derartigen Komponenten bzw. Elementen verbunden sein.

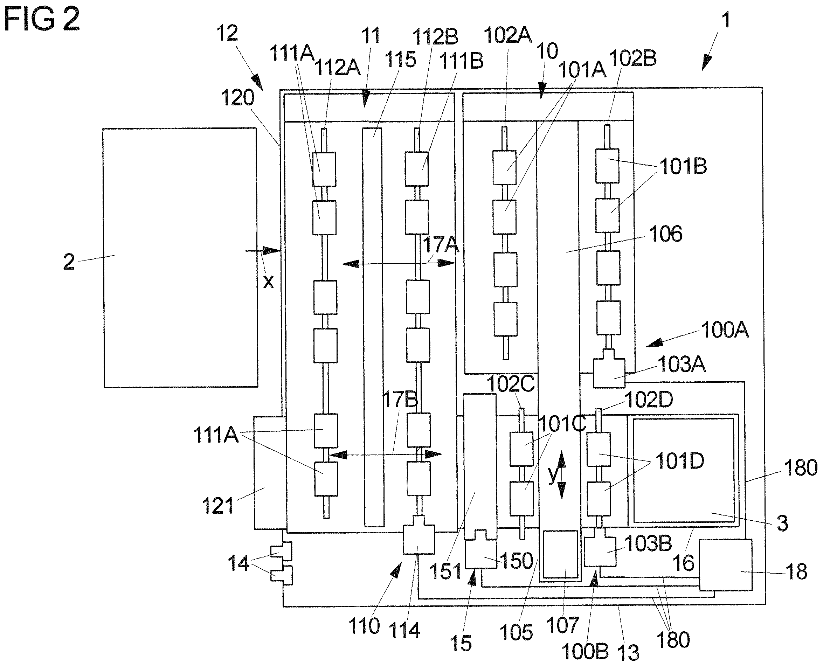

Anhand Fig. 2, die die Vorrichtung 1 aus Fig. 1 in einer aufgeschnittenen Ansicht von oben zeigt, soll nun erläutert werden, wie mit der Vorrichtung 1 ein Rezeptpapier 2 gescannt, bedruckt und erneut gescannt und ein Bon 3 bedruckt wird.

Am Rezeptpresenter 120 der Presentereinrichtung 12 wird hierzu ein Rezept 2 in Papiereinzugsrichtung x entlang einer ersten Transportbahn 17A der Vorrichtung 1 zugeführt. Dabei berührt es einen Satz von Paaren erster Antriebswalzen 111A an parallelen ersten Antriebsachsen 112A eines Antriebs 110 einer Scannereinrichtung 11, die oberhalb und unterhalb der ersten Transportbahn 17A angeordnet sind, sodass in Fig. 2 jeweils nur die oberen Antriebswalzen 111 A und die obere Antriebsachse 112A sichtbar ist und die darunter angeordneten Antriebswalzen 111 A und die untere Antriebsachse 112A verdecken. Die Antriebswalzen 111 A sind jeweils aus Gummi oder einem ähnlichen Material gefertigt, welches an Papier eine ausreichende Haftreibung aufweist, sodass das Rezeptpapier 2 bei einer Berührung der (in eine Drehung versetzten) Antriebswalzen 111A in Bewegung versetzt wird.

Die Antriebsachsen 112A und damit die Antriebswalzen 111A der Scannereinrichtung 11 werden von einem Antriebsmotor 114 über eine nicht dargestellte Wirkverbindung, z.B. einen Riemen- oder Zahnradantrieb, derart angetrieben, dass gegenüberliegende Antriebswalzen 111A gegenläufig zueinander gedreht werden. Alternativ kann auch nur eine der Antriebsachsen 112A angetrieben werden. Um festzustellen, ob das Rezeptpapier 2 am Rezeptpresenter 120 eingelegt ist, kann die Vorrichtung einen geeigneten, hier nicht dargestellten Sensor oder Schalter umfassen. Für den Fall, dass ein Rezeptpapier 2 im Rezeptpresenter 120 eingelegt ist (und/oder gegebenenfalls unter weiteren Voraussetzungen), wird der Antrieb 110 der Scannereinrichtung 11 aktiviert, wobei das Rezept 2 mittels der Paare von Antriebswalzen 111 A in das Innere des Gehäuses 13 der Vorrichtung 1 eingezogen und entlang der ersten Transportbahn 17A transportiert wird.

Durch den Transport entlang der ersten Transportbahn 17A in Papiereinzugsrichtung x gerät das Rezeptpapier 2 in Kontakt mit einem Satz von Paaren zweiter Antriebswalzen 111 B an zueinander parallelen zweiten Antriebsachsen 112B des Antriebs 110 der Scannereinrichtung 11, welche ebenfalls mittels des Antriebsmotors 114 (über eine geeignete Wirkverbindung gekoppelt) angetrieben werden. Der Abstand zwischen den ersten und zweiten Antriebsachsen 112A, 112B ist geringer als die Breite des Rezeptpapiers 2 (bzw. allgemein dessen Ausdehnung in Papiereinzugsrichtung x), sodass das Rezeptpapier 2 bei seinem Transport in der Vorrichtung 1 stets in Kontakt mit Antriebswalzen 111 A, 111 B steht. Auch die Paare von zweiten Antriebswalzen 111 B transportieren das Rezeptpapier 2 weiter entlang der ersten Transportbahn 17A und mit derselben Geschwindigkeit die die Paare von ersten Antriebswalzen 111 A.

Zwischen dem ersten Paar von Antriebsachsen 112A mit den ersten Antriebswalzen 111 A und dem zweiten Paar von Antriebsachsen 112B mit den zweiten Antriebswalzen 111 B ist oberhalb und unterhalb der ersten Transportbahn 17A je ein längserstreckter Scanner 115 parallel zu den Antriebsachsen 112A, 112B und senkrecht zur Papiereinzugsrichtung x angeordnet (von denen in Fig. 2 nur der obere Scanner 115 sichtbar ist). Wird das Rezeptpapier 2 von den Antriebswalzen 111 A, 111 B entlang der ersten Transportbahn 17A transportiert, passiert es somit die Scanner 115 und kann von diesen einseitig oder beidseitig gescannt werden.

Bei einem weiteren Transport des Rezeptpapiers 2 durch den Antrieb 110 der Scannereinrichtung 11 wird das Rezeptpapier 2 von Paaren von an einem Paar von ersten Antriebsachsen 102A angeordneten ersten Antriebswalzen 101 A eines ersten Antriebs 100A einer Druckereinrichtung 10 ergriffen und weiter entlang der ersten Transportbahn 17A transportiert. Die ersten Antriebsachsen 102A des ersten Antriebs 100A der Druckereinrichtung 10 werden über eine nicht dargestellte Wirkverbindung mit einem auch ein Paar von zweiten Antriebsachsen 102B der Druckvorrichtung 10 antreibenden Antriebsmotor 103A angetrieben.

Der Abstand zwischen dem Paar von zweiten Antriebsachsen 112B der Scannereinrichtung 11 und dem Paar von ersten Antriebsachsen 102A der Druckereinrichtung 10 (sowie dem Paar von ersten Antriebsachsen 102A und dem Paar von zweiten Antriebsachsen 102B der Druckereinrichtung 10) ist geringer als die Breite des Rezeptpapiers 2. Somit wird das Rezeptpapier 2 auf einem Abschnitt der ersten Transportbahn 17A gleichzeitig von dem Antrieb 110 der Scannereinrichtung 11 und von dem ersten Antrieb 100A der Druckereinrichtung 10 transportiert. Damit das Rezeptpapier 2 dabei gleichmäßig transportiert wird, sind beide Antriebe 110, 100A miteinander synchronisiert, wie nachfolgend näher erläutert werden wird.

Zwischen den beiden Paaren von Antriebsachsen 102A, 102B der Druckereinrichtung 10 ist, parallel zu diesen, eine Druckbahn 106 angeordnet. Auf der Druckbahn 106 ist ein Druckkopf 107 in Form eines Tintenstrahl-Druckkopfes entlang einer senkrecht zur ersten Transportbahn 17A und einer sich parallel dazu erstreckenden zweiten Transportbahn 17B verlaufenden Druckachse y verschiebbar angeordnet. Während das Rezeptpapier 2 von dem Antrieb 100A der Druckvorrichtung 10 über die Druckbahn 106 transportiert wird, bedruckt der Druckkopf 107 das Rezeptpapier 2 abschnittsweise.

Ist der Druckvorgang abgeschlossen, wird die Drehrichtung der Antriebsachsen 102A, 102B; 111 A, 111 B der Druckereinrichtung 10 und der Scannereinrichtung 11 umgekehrt und das Rezeptpapier 2 entgegen der Papiereinzugsrichtung x entlang der ersten Transportbahn 17A zurück zum Rezeptpresenter 120 transportiert. Dabei passiert es erneut die Scanner 115 und kann von diesen ein zweites Mal (einseitig oder beidseitig) gescannt werden. Am Rezeptpresenter 120 kann das fertig bearbeitete Rezeptpapier 2 dann entnommen werden.

Entlang der zur ersten Transportbahn 17A parallelen zweiten Transportbahn 17B kann analog zum Transport des Rezeptpapiers 2 ein anderes bedruckbares Medium transportiert, bedruckt und gescannt werden. Im Unterschied zur ersten Transportbahn 17A erfolgt bei der zweiten Transportbahn 17B die Papierzufuhr vorliegend jedoch nicht über die Presentereinrichtung 12 (und dort über den zugehörigen Bonpresenter 121), sondern über einen Papiervorrat in Form einer in einer Aufnahme 16 angeordneten Rolle eines Bonpapiers 3.

Das aufgerollte Bonpapier 3 wird mittels der der zweiten Transportbahn 17B zugeordneten zweiten Antriebsvorrichtung 100B der Druckereinrichtung 10 abgerollt und über die Druckbahn 106 transportiert. Die zweite Antriebsvorrichtung 100B umfasst zum Transport des Bonpapiers 3 entsprechend der ersten Antriebsvorrichtung 100A der Druckereinrichtung 10 beidseits der Druckbahn 106 parallel zueinander angeordnete Paare von ersten und zweiten Antriebsachsen 102C, 102D mit daran angeordneten Paaren von Antriebswalzen 101C, 101D.

Nachdem ein Abschnitt des Bonpapiers 3 mittels der Druckereinrichtung 10 bedruckt wurde, kann dieser von dem Rest (der Rolle) des Bonpapiers 3 mittels eines durch einen Aktuator 150 betätigten Messers 151 einer Schneideeinrichtung 15 getrennt bzw. abgeschnitten werden. Der Antrieb 110 der entlang der zweiten Transportbahn 17B in Richtung des Bonpresenters 121 gesehen hinter der Druckereinrichtung 10 und der Schneideeinrichtung 15 angeordneten Scannereinrichtung 11 transportiert den abgeschnittenen Abschnitt des Bonpapiers 3 zum Bonpresenter 121, wo er von einem Benutzer der Vorrichtung 1 entnommen werden kann. Der Bonpresenter 121 ist Teil der Presentereinrichtung 12, welche benachbart zur Scannereinrichtung 11 angeordnet ist; ein separater Presenter für das Bonpapier 3 ist somit nicht erforderlich, sodass die Vorrichtung 1 platzsparend ausgeführt ist.

Zur Steuerung der Druckereinrichtung 10, der Scannereinrichtung 11 und der Schneideeinrichtung 15 (und ggf. weiterer Komponenten der Vorrichtung 1, wie z.B. der Anzeigeeinrichtung 14, der Scanner 115 und des Druckkopfes 107) umfasst die Vorrichtung 1 eine Steuerungseinheit 18. Diese ist zumindest mit den Antriebsmotoren 103A, 103B, 114 der Druckereinrichtung 10 und der Scannereinrichtung 11 und dem Aktuator 150 der Schneideeinrichtung 15 über Steuerverbindungen 180 wie beispielsweise Kabel verbunden. Alternativ kann die Steuerungseinheit 18 auch mit einer nicht dargestellten Steuerungseinheit der Druckereinrichtung 10, der Scannereinrichtung 11 und/oder der Schneideeinrichtung 15 verbunden sein. Des Weiteren kann auch vorgesehen sein, dass die Steuerungseinheit 18 die Antriebe 100A, 100B der Druckereinrichtung 10 anstatt über direkte Steuerverbindungen 180 indirekt über z.B. einen Druckercontroller der Druckereinrichtung 10 steuert.

Um einen gleichmäßigen Transport des Rezeptpapiers 2 und des Bonpapiers 3 entlang der ersten bzw. zweiten Transportbahn 17A, 17B auch bei einer Übergabe von der Scannereinrichtung 11 zur Druckereinrichtung 10 (bzw. umgekehrt) zu ermöglichen (d.h. wenn das Rezeptpapier 2 bzw. das Bonpapier 3 Kontakt zu Antriebswalzen 101A, 101C; 111 B sowohl von der Druckereinrichtung 10 als auch der Scannereinrichtung 11 hat), sind beide Antriebe 110, 100A bzw. 100B synchronisiert, transportieren das Rezeptpapier 2 bzw. das Bonpapier 3 somit mit derselben Geschwindigkeit in dieselbe Richtung. Auch ein Starten und Stoppen des Transports erfolgt im Wesentlichen gleichzeitig.

Zur Synchronisation des Antriebs 110 der Scannereinrichtung 11 mit den Antrieben der Druckereinrichtung 100A, 100B liest die Steuerungseinheit 18 über die Steuerungsverbindung 180 mit dem Antriebsmotor 114 der Scannereinrichtung 11 Motorsignale des Antriebsmotors 114 aus, aus denen die Informationen über die Transportrichtung und Transportgeschwindigkeit und damit auch über ein Starten und Stoppen (nachfolgend allgemein als Transportparameter bezeichnet) des Antriebs 110 der Scannereinrichtung 11 bestimmt. Anhand dieser Informationen steuert die Steuerungseinheit 18 die Antriebsmotoren 103A, 103B der Druckereinrichtung 10 derart an, dass die Antriebe 100A, 100B der Druckereinrichtung 10 gleichzeitig starten und stoppen wie der Antrieb 110 der Scannereinrichtung 11 und das Rezeptpapier 2 bzw. das Bonpapier 3 in derselben Richtung und mit derselben Geschwindigkeit transportieren.

Durch die beschriebene Art der Synchronisation können die Antriebe 100A, 100B der Druckereinrichtung 10 an die jeweiligen aktuellen Transportparameter des Antriebs 110 der Scannereinrichtung 11 angepasst werden, auch wenn die Scannereinrichtung 11 ansonsten eine von der Steuerungseinheit 18 getrennte eigene Steuerungseinheit umfasst. Somit kann die Scannereinrichtung 11 durch einen handelsüblichen beidseitigen DIN A4-Scanner gebildet werden. Da die Steuerungseinheit 18 die Motorsignale (z.B. Phasensignale des Antriebsmotors 114) der Scannereinrichtung 11 (oder alternativ Signale einer die Transportparameter erfassenden Sensorik der Scannereinrichtung 11) ausliest und die Transportparameter der Antriebe 100A, 100B der Druckereinrichtung 10 gemäß der ausgelesenen Transportparameter anpasst, transportieren die Antriebe 100A, 100B der Druckereinrichtung 10 das Rezeptpapier 2 bzw. das Bonpapier 3 stets synchron zu dem Antrieb 110 der Scannereinrichtung 11. Dies ist insbesondere auch dann der Fall, wenn die Transportparameter der Scannereinrichtung 11 geändert werden, beispielsweise durch eine Aktualisierung einer Steuerungssoftware einer Steuerungseinheit der Scannereinrichtung 11 oder aufgrund einer geänderten Einstellung einer Auflösung des gescannten Abbilds des Rezeptpapiers 2 (und einer damit einhergehenden schnelleren oder langsameren Transportgeschwindigkeit). Die Druckereinrichtung 10 und die Scannereinrichtung 11 können somit, abgesehen von dem Abgriff der Motorsignale, als voneinander unabhängige, separate Komponenten ausgeführt sein und dennoch in Bezug auf den Transport des Rezeptpapiers 2 bzw. des Bonpapiers 3 miteinander synchronisiert sein.

Da die Antriebe 100A, 100B; 110 der Druckereinrichtung 10 und der Scannereinrichtung 11 synchronisiert sind, kommt es nicht zu einem Aufstauen des Rezeptpapiers 2 bzw. des Bonpapiers 3. Der Transport des Rezeptpapiers 2 (und auch des Bonpapiers 3) erfolgt somit fehlertolerant. Falls im Gegensatz beispielsweise der Antrieb 110 der Scannereinrichtung 11 das Rezeptpapier 2 schneller zum ersten Antrieb 100A der Druckereinrichtung 10 transportieren würde, als dieser es weiter transportiert, könnte es zu einer Schlaufenbildung des Rezeptpapiers 2 kommen. Insbesondere, wenn das Rezeptpapier geknickt oder zerknittert (und ggf. wieder gerade gezogen) ist, könnte es bei einer solchen Schlaufenbildung dann zu einem Aufstauen oder ungleichmäßigen Transport des Rezeptpapiers 2 kommen und ggf. zu einem fehlerhaften Scan- und/oder Druckvorgang.

Ein weiterer Vorteil der beschriebenen Vorrichtung 1 ist, dass anstatt zwei separater Druckereinrichtungen nur eine Druckereinrichtung 10 sowohl zum Bedrucken des Rezeptpapiers 2 als auch des Bonpapiers 3 verwendet wird. Da eine zweite Druckereinrichtung nicht notwendig ist, kann die Vorrichtung 1 platzsparend ausgeführt werden. Da nur ein Druckkopf 107 und dafür nur eine Parkstation 105 zum Parken und zur Wartung (auch als Servicestation bezeichnet) des Druckkopfes 107 notwendig ist, können auch die Herstellungskosten und der Wartungsaufwand der Vorrichtung 1 reduziert werden.

Auch kann mit der Vorrichtung 1 eine hohe Bearbeitungsgeschwindigkeit erzielt werden, da das Bonpapier 3 gleichzeitig bedruckt und ausgegeben werden kann, wie das Rezeptpapier 2 bedruckt, gescannt und/oder ebenfalls ausgegeben wird.

Der der Erfindung zugrunde liegende Gedanke ist nicht auf das vorangehend geschilderte Ausführungsbeispiel beschränkt, sondern lässt sich auch bei anders ausgestalteten Ausführungsformen verwirklichen. So wurde die Vorrichtung 1 aus Gründen der einfachen Veranschaulichung als Apothekenterminal beschrieben, kann jedoch allgemein zum Scannen und/oder Bedrucken von bedruckbaren Medien auf zwei (oder auch drei oder mehr) Transportbahnen verwendet werden. Beispielsweise kann die Vorrichtung 1 auch als Lottoterminal verwendet werden, wo anstatt eines Rezepts ein Lottoschein gescannt und bedruckt wird, oder in einem Bankautomat.

Auch ist es möglich, die Antriebe 100A, 100B der Druckereinrichtung 10 mit dem Antrieb 110 der Scannereinrichtung 11 zu synchronisieren, indem die Steuerungseinheit 18, umgekehrt wie vorangehend beschrieben, Motorsignale von zumindest einem der Antriebsmotoren 103A, 103B der Druckereinheit 10 ausliest und den Antrieb 110 der Scannereinrichtung 11 in Abhängigkeit der ausgelesenen Motorsignale steuert. Des Weiteren ist anstatt einer einseitigen Kommunikation über das Auslesen von Motorsignalen auch eine beidseitige Kommunikation zwischen der Steuerungseinheit 18 und einem oder mehreren der Antriebe 100A, 100B, 110 der Druckereinrichtung 10 und der Scannereinrichtung 11 möglich.

Ferner lässt sich insbesondere das Verfahren zur Synchronisation der Druckereinrichtung 10 mit der Scannereinrichtung 11 über das Auslesen von Signalen des Antriebsmotors 114 oder einer Sensorik der Scannereinrichtung 11 und die Steuerung der Druckereinrichtung 10 in Abhängigkeit der ausgelesenen Signale allgemein auf die Steuerung und Synchronisation zweier getrennter Einrichtungen, die bedruckbare Medien transportieren und zueinander übergeben, übertragen.

### Bezugszeichenliste

- 1: Vorrichtung
- 10: Druckereinrichtung
- 100A, 100B: Antrieb
- 101A-101D: Antriebswalze
- 102A-102D: Antriebsachse
- 103A, 103B: Antriebsmotor
- 105: Parkstation
- 106: Druckbahn
- 107: Druckkopf
- 11: Scannereinrichtung
- 110: Antrieb
- 111A, 111 B: Antriebswalze
- 112A, 112B: Antriebsachse
- 114: Antriebsmotor
- 115: Scanner
- 12: Presentereinrichtung
- 120: Rezeptpresenter
- 121: Bonpresenter
- 13: Gehäuse
- 14: Anzeigeeinrichtung
- 15: Schneideeinrichtung
- 150: Aktuator
- 151: Messer
- 16: Aufnahme für Bonpapier
- 17A, 17B: Transportbahn
- 18: Steuerungseinheit
- 180: Steuerverbindung
- 2: Rezeptpapier
- 3: Bonpapier
- x: Papiereinzugsrichtung
- y: Druckachse

## Patentansprüche

1. Vorrichtung zum Bedrucken und Scannen von bedruckbaren Medien (2, 3), mit
- einer Druckereinrichtung (10) mit einem ersten Antrieb (100A) und einer Druckeinheit (107) zum Bedrucken der bedruckbaren Medien (2, 3),
- einer Scannereinrichtung (11) zum Scannen der bedruckbaren Medien (2, 3) mit einem Antrieb (110) und
- einer Presentereinrichtung (12) zum Ausgeben und Einziehen der bedruckbaren Medien (2, 3),
wobei die bedruckbaren Medien (2, 3) mittels des ersten Antriebs (100A) der Druckereinrichtung (10) und des Antriebs (110) der Scannereinrichtung (11) entlang einer ersten längserstreckten Transportbahn (17A) transportierbar sind,
**dadurch gekennzeichnet, dass**
die Druckereinrichtung (10) einen unterschiedlichen, zweiten Antrieb (100B) umfasst, wobei bedruckbare Medien (2, 3) mittels des zweiten Antriebs (100B) der Druckereinrichtung (10) und des Antriebs (110) der Scannereinrichtung (11) entlang einer zur ersten Transportbahn (17A) parallelen zweiten längserstreckten Transportbahn (17B) transportierbar sind, wobei die Transportbahnen (17A, 17B) quer zu ihrer Längserstreckungsrichtung voneinander beabstandet angeordnet sind und wobei die Druckeinheit (107) derart quer zu den Transportbahnen (17A, 17B) verschiebbar ist, dass bedruckbare Medien (2, 3) auf beiden Transportbahnen (17A, 17B) mit der Druckeinheit (107) bedruckbar sind.

2. Vorrichtung nach Anspruch 1, **dadurch gekennzeichnet, dass** die Scannereinrichtung (11) und die Druckereinrichtung (10) entlang zumindest einer der Transportbahnen (17A, 17B) hintereinander angeordnet sind.

3. Vorrichtung nach Anspruch 1 oder 2, **dadurch gekennzeichnet, dass** der Antrieb (110) der Scannereinrichtung (11) und zumindest einer der Antriebe (100A, 100B) der Druckereinrichtung (10) miteinander synchronisiert sind.

4. Vorrichtung nach einem der vorangehenden Ansprüche, **gekennzeichnet durch** eine Steuerungseinheit (18) zur Steuerung von mindestens einem der Antriebe (100A, 100B; 110) der Druckereinrichtung (10) und der Scannereinrichtung (11).

5. Vorrichtung nach Anspruch 4, **dadurch gekennzeichnet, dass** die Steuerungseinheit (18) Motorsignale des Antriebs (110) der Scannereinrichtung (11) ausliest und zumindest einen der Antriebe (100A, 100B) der Druckereinrichtung (10) in Abhängigkeit von den ausgelesenen Motorsignalen ansteuert.

6. Vorrichtung nach Anspruch 4, **dadurch gekennzeichnet, dass** die Steuerungseinheit (18) Motorsignale von zumindest einem der Antriebe (100A, 100B) der Druckereinrichtung (10) ausliest und den Antrieb (110) der Scannereinrichtung (11) in Abhängigkeit von den ausgelesenen Motorsignalen ansteuert.

7. Vorrichtung nach einem der Ansprüche 4 bis 6, **dadurch gekennzeichnet, dass** die Steuerungseinheit (18) ausgebildet ist, den Antrieb (110) der Scannereinrichtung (11) oder mindestens einen der Antriebe (100A, 100B) der Druckereinrichtung (10) derart zu steuern, dass auf zumindest einer der Transportbahnen (17A, 17B) befindliche bedruckbare Medien (2, 3) sowohl von dem Antrieb (100A, 100B) der Druckereinrichtung (10) als auch dem Antrieb (110) der Scannereinrichtung (11) mit der gleichen Geschwindigkeit entlang der Transportbahn (17A, 17B) transportiert werden.

8. Vorrichtung nach einem der Ansprüche 4 bis 7, **dadurch gekennzeichnet, dass** die Steuerungseinheit (18) ausgebildet ist, ein gleichzeitiges Starten oder Stoppen von mindestens einem der Antriebe (100A, 100B) der Druckereinrichtung (10) und dem Antrieb (110) der Scannereinrichtung (11) zu bewirken.

9. Vorrichtung nach einem der vorangehenden Ansprüche, **dadurch gekennzeichnet, dass** mit der Vorrichtung (1) ein erstes bedruckbares Medium (2, 3) entlang einer der beiden Transportbahnen (17A, 17B) transportiert und mittels der Druckereinrichtung (10) bedruckt und/oder mittels der Scannereinrichtung (11) gescannt werden kann, während gleichzeitig ein zweites bedruckbares Medium (2, 3) entlang der anderen der beiden Transportbahnen (17A, 17B) transportiert und mittels der Druckereinrichtung (10) bedruckt und/oder mittels der Scannereinrichtung (11) gescannt wird.

10. Vorrichtung nach einem der vorangehenden Ansprüche, **gekennzeichnet durch** eine Schneideeinrichtung (15) zum Schneiden eines bedruckbaren Mediums (3).

11. Vorrichtung nach einem der vorangehenden Ansprüche, **gekennzeichnet durch** eine Aufnahme (16) für einen Vorrat eines bedruckbaren Mediums (3).

12. Vorrichtung nach einem der vorangehenden Ansprüche, **dadurch gekennzeichnet, dass** die Presentereinrichtung (12) zwei benachbarte und sich an die parallelen Transportbahnen (17A, 17B) anschließende Presenter (120, 121) zum Einziehen und/oder Ausgeben der bedruckbaren Medien (2, 3) umfasst.

13. Vorrichtung nach einem der vorangehenden Ansprüche, **dadurch gekennzeichnet, dass** die Scannereinrichtung (11) ausgebildet ist, bedruckbare Medien (2, 3) beidseitig zu scannen.

14. Vorrichtung nach einem der vorangehenden Ansprüche, **dadurch gekennzeichnet, dass** sich die Scannereinrichtung (11) über beide Transportbahnen (17A, 17B) erstreckt.

## Claims

1. A device for printing and scanning printable media (2, 3), comprising
- a printer device (10) with a first drive (100A) and a printing unit (107) for printing the printable media (2, 3),
- a scanner device (11) for scanning the printable media (2, 3) with a drive (110), and
- a presenter device (12) for outputting and pulling in the printable media (2, 3),
wherein the printable media (2, 3) are transportable by means of the first drive (100A) of the printer device (10) and the drive (110) of the scanner device (11) along a first longitudinally extended transport path (17A),
**characterized in that**
the printer device (10) comprises a different, second drive (100B), wherein printable media (2, 3) are transportable by means of the second drive (100B) of the printer device (10) and the drive (110) of the scanner device (11) along a second longitudinally extended transport path (17B) parallel to the first transport path (17A), wherein the transport paths (17A, 17B) are arranged at a distance from each other transversely to their direction of longitudinal extension and wherein the printing unit (107) is shiftable transversely to the transport paths (17A, 17B) such that printable media (2, 3) are printable on both transport paths (17A, 17B) by means of the printing unit (107).

2. The device according to claim 1, **characterized in that** the scanner device (11) and the printer device (10) are arranged one behind the other along at least one of the transport paths (17A, 17B).

3. The device according to claim 1 or 2, **characterized in that** the drive (110) of the scanner device (11) and at least one of the drives (100A, 100B) of the printer device (10) are synchronized with each other.

4. The device according to any of the preceding claims, **characterized by** a control unit (18) for controlling at least one of the drives (100A, 100B; 110) of the printer device (10) and the scanner device (11).

5. The device according to claim 4, **characterized in that** the control unit (18) reads out motor signals of the drive (110) of the scanner device (11) and actuates at least one of the drives (100A, 100B) of the printer device (10) in dependence on the motor signals read out.

6. The device according to claim 4, **characterized in that** the control unit (18) reads out motor signals from at least one of the drives (100A, 100B) of the printer device (10) and actuates the drive (110) of the scanner device (11) in dependence on the motor signals read out.

7. The device according to any of claims 4 to 6, **characterized in that** the control unit (18) is formed to control the drive (110) of the scanner device (11) or at least one of the drives (100A, 100B) of the printer device (10) such that printable media (2, 3) present on at least one of the transport paths (17A, 17B) are transported along the transport path (17A, 17B) with the same speed both by the drive (100A, 100B) of the printer device (10) and by the drive (110) of the scanner device (11).

8. The device according to any of claims 4 to 7, **characterized in that** the control unit (18) is formed to effect simultaneous starting or stopping of at least one of the drives (100A, 100B) of the printer device (10) and the drive (110) of the scanner device (11).

9. The device according to any of the preceding claims, **characterized in that** a first printable medium (2, 3) can be transported by means of the device (1) along one of the two transport paths (17A, 17B) and be printed by means of the printer device (10) and/or be scanned by means of the scanner device (11), while at the same time a second printable medium (2, 3) is transported along the other one of the two transport paths (17A, 17B) and printed by means of the printer device (10) and/or scanned by means of the scanner device (11).

10. The device according to any of the preceding claims, **characterized by** a cutting device (15) for cutting a printable medium (3).

11. The device according to any of the preceding claims, **characterized by** a receptacle (16) for a supply of a printable medium (3).

12. The device according to any of the preceding claims, **characterized in that** the presenter device (12) comprises two adjacent presenters (120, 121) adjoining the parallel transport paths (17A, 17B) for pulling in and/or outputting the printable media (2, 3).

13. The device according to any of the preceding claims, **characterized in that** the scanner device (11) is formed to scan printable media (2, 3) on both sides.

14. The device according to any of the preceding claims, **characterized in that** the scanner device (11) extends over both transport paths (17A, 17B).

## Revendications

1. Dispositif servant à imprimer et à scanner des supports imprimables (2, 3), comprenant
- un système d'imprimante (10) comprenant un premier entraînement (100A) et une unité d'impression (107) servant à imprimer les supports imprimables (2, 3),
- un système de scanner (11) servant à scanner les supports imprimables (2, 3), comprenant un entraînement (110), et
- un système de présentation (2) servant à sortir et à rentrer les supports imprimables (2, 3),
dans lequel les supports imprimables (2, 3) peuvent être transportés au moyen du premier entraînement (100A) du système d'imprimante (10) et de l'entraînement (110) du système de scanner (11) le long d'une première voie de transport (17A) s'étendant en longueur,
**caractérisé en ce**
**que** le système d'imprimante (10) comprend un deuxième entraînement (100B) différent, dans lequel des supports imprimables (2, 3) peuvent être transportés le long d'une deuxième voie de transport (17B) s'étendant en longueur parallèle à la première voie de transport (17A), au moyen du deuxième entraînement (100B) du système d'imprimante (10) et de l'entraînement (110) du système de scanner (11), dans lequel les voies de transport (17A, 17B) sont disposées à distance l'une de l'autre de manière transversale par rapport à leur sens d'extension longitudinale,
et dans lequel l'unité d'impression (107) peut être déplacée par coulissement de telle manière de manière transversale par rapport aux voies de transport (17A, 17B) que des supports imprimables (2, 3) peuvent être imprimés avec l'unité d'impression (107) sur les deux voies de transport (17A, 17B).

2. Dispositif selon la revendication 1, **caractérisé en ce que** le système de scanner (11) et le système d'impression (10) sont disposés l'un derrière l'autre le long au moins d'une des voies de transport (17A, 17B).

3. Dispositif selon la revendication 1 ou 2, **caractérisé en ce que** l'entraînement (110) du système de scanner (11) et au moins un des entraînements (100A, 100B) du système d'imprimante (10) sont synchronisés l'un avec l'autre.

4. Dispositif selon l'une quelconque des revendications précédentes, **caractérisé par** une unité de commande (18) servant à commander au moins un des entraînements (100A, 100B ; 110) du système d'imprimante (10) et du système de scanner (11).

5. Dispositif selon la revendication 4, **caractérisé en ce que** l'unité de commande (18) lit des signaux de moteur de l'entraînement (110) du système de scanner (11) et pilote au moins un des entraînements (100A, 100B) du système d'imprimante (10) en fonction des signaux de moteur lus.

6. Dispositif selon la revendication 4, **caractérisé en ce que** l'unité de commande (18) lit des signaux de moteur d'au moins un des entraînements (100A, 100B) du système d'imprimante (10) et pilote l'entraînement (110) du système de scanner (11) en fonction des signaux de moteur lus.

7. Dispositif selon l'une quelconque des revendications 4 à 6, **caractérisé en ce que** l'unité de commande (18) est réalisée afin de commander l'entraînement (110) du système de scanner (11) ou au moins un des entraînements (100A, 100B) du système d'imprimante (10) de telle manière que des supports imprimables (2, 3) se trouvant sur au moins une des voies de transport (17A, 17B) sont transportés à la même vitesse le long de la voie de transport (17A, 17B) aussi bien par l'entraînement (100A, 100B) du système d'imprimante (10) que par l'entraînement (110) du système de scanner (11).

8. Dispositif selon l'une quelconque des revendications 4 à 7, **caractérisé en ce que** l'unité de commande (18) est réalisée afin de provoquer un démarrage ou un arrêt simultané d'au moins un des entraînements (100A, 100B) du système d'imprimante (10) et de l'entraînement (110) du système de scanner (11).

9. Dispositif selon l'une quelconque des revendications précédentes, **caractérisé en ce qu'**un premier support imprimable (2, 3) peut être transporté le long d'une des deux voies de transport (17A, 17B) avec le dispositif (1) et peut être imprimé au moyen du système d'imprimante (10) et/ou peut être scanné au moyen du système de scanner (11), tandis que dans le même temps, un deuxième support imprimable (2, 3) est transporté le long de l'autre des deux voies de transport (17A, 17B) et est imprimé au moyen du système d'imprimante (10) et/ou est scanné au moyen du système de scanner (11).

10. Dispositif selon l'une quelconque des revendications précédentes, **caractérisé par** un système de découpe (15) servant à découper un support (3) imprimable.

11. Dispositif selon l'une quelconque des revendications précédentes, **caractérisé par** un logement (16) pour un stock d'un support (3) imprimable.

12. Dispositif selon l'une quelconque des revendications précédentes, **caractérisé en ce que** le système présentoir (12) comprend deux présentoirs (120, 121) adjacents et se raccordant aux voies de transport (17A, 17B) parallèles, pour rentrer et/ou sortir les supports imprimables (2, 3).

13. Dispositif selon l'une quelconque des revendications précédentes, **caractérisé en ce que** le système de scanner (11) est réalisé afin de scanner des deux côtés des supports imprimables (2, 3).

14. Dispositif selon l'une quelconque des revendications précédentes, **caractérisé en ce que** le système de scanner (11) s'étend sur deux voies de transport (17A, 17B).
